# EUROPEAN PATENT APPLICATION

(11) **EP 2 290 390 A1**
(43) Date of publication of application: **02.03.2011**
(21) Application number: 09425324.2
(22) Date of filing: 07.08.2009
(51) Int. Cl.: G01S 3/42, H01Q 1/34, H01Q 3/08, H01Q 1/12

(54) **Satellite connection apparatus for transport means**

(71) Applicant: Milano Teleport S.p.A., 20084 Lacchiarella (MI) (IT)
(72) Inventor: Steiner, Carlo, 27010 San Genesio ed Uniti (Pavia) (IT)
(74) Representative: Lunati & Mazzoni S.r.L.

(57) **Abstract**

A satellite connection apparatus (1) is provided for transport means (11) comprising: an antenna (2) of geostabilized type, suitable to track a first satellite (10) in coverage and of establishing a connection with said first satellite (10), a modem (3) capable of rendering the signal received by said antenna (2) usable by computers and the like, a position detection device (5) capable of determining the position of said transport means (11) on the globe and automatic actuator means capable of moving said antenna (2), wherein the antenna (2) is capable of automatically tracking a different satellite (10) in coverage, when the first satellite (10) is no longer in coverage following movements of the transport means.

## Description

The present invention relates to a satellite connection apparatus for transport means of the type specified in the preamble of the first claim.

Satellite connections and, in particular, satellite internet connections are currently well known.

They are suitable, in particular, for receiving internet signals by means of a connection via electromagnetic waves with a satellite.

Said satellite is moreover geostabilized; that is, it always maintains the same position relative to the ground.

The connection takes place by means of a connection apparatus comprising an antenna or parabola, capable of stabilizing the connection, if set up to track a satellite, and a modem capable of interpreting the signal coming from the antenna and transmitting it to a computer or the like.

The antenna, given the geostability of the satellites, must therefore constantly point in a fixed direction.

Such apparatuses are also placed on various transport means and, in particular, on ships.

In the latter case, the apparatuses enable the antenna to alter the proper direction of tracking according to the movement of the transport means on the terrestrial globe, so as to always track the satellite. Because of such property, the antenna is also said to be geostabilized.

The aforesaid prior art has some important drawbacks.

In fact, satellites do not cover or transmit in correspondence with the entire surface of the globe.

Consequently, transport means can enter zones not covered by the satellite signal and lose that signal.

In such case, it is necessary to alter the position of the antenna in order to train it on a new satellite.

It is necessary, furthermore, to alter the settlings of the modem, since the frequency and type of signal can vary from satellite to satellite.

Such operations are slow and laborious and in some cases necessitate suitable technical support.

The coverage can vary, furthermore, because of obstacles present on the transport means, like a ship's masts or the like, such obstacles being unforeseeable on just examining the coverage of the satellite on the globe.

In this situation the technical aim underlying the present invention is to devise a satellite connection apparatus for transport means capable of substantially overcoming the aforesaid drawbacks.

Within said technical aim, an important object of the invention is to achieve a satellite connection apparatus for transport means that makes constant automatic signal reception possible, independent of the satellite coverage The technical aim and the objects specified are achieved by a satellite connection apparatus for transport means, according to the appended claim 1.

Preferred embodiments are highlighted in the dependent claims.

The characteristics and advantages of the invention are clarified below by the detailed description of a preferred embodiment of the invention with reference to the attached drawings, wherein:

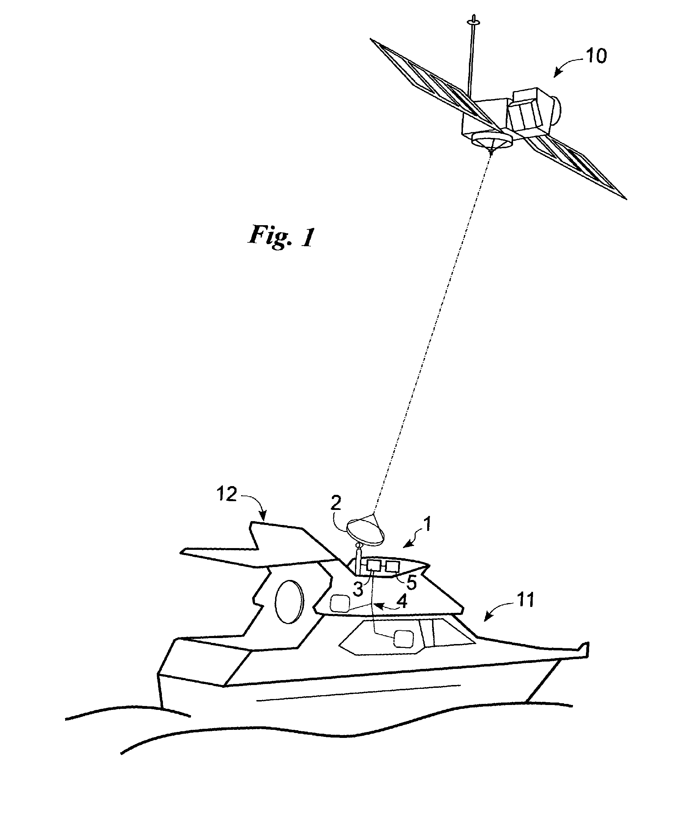

Fig. 1 shows a diagram that can facilitate understanding of the description of the invention.

With reference to the figure cited, the connection apparatus according to the invention is indicated overall by the reference number 1.

It can be positioned on transport means 11 and, in particular, on a ship or boats.

It comprises an antenna 2, consisting of a parabola and capable of stabilizing a connection, particularly an internet connection with a satellite 10, if trained on that satellite 10, and a modem 3 capable of interpreting the signal sent by the satellite 10 to the antenna 2.

The modem 3 is further capable of transmitting the signal received and converted so that it is usable, in particular, by a computer network 4, connected to various computers and the like or to other devices or to otherwise enable the internet connection of said devices

The antenna 2 is, furthermore, of geostabilized type, that is, capable of always tracking a satellite 10, even following movements of the transport means 11 and of the automatic actuator means, capable of moving said antenna 3 and comprising rotating electric motors or the like.

The apparatus 1 further includes a position detection device 5, consisting, in particular, of a GPS capable of determining the position of the transport means on the globe and connected to the modem 3.

The apparatus 1 then includes a database of settings pertaining to different satellites 10.

Such setting database includes the different settings necessary for interpreting the signal depending on the satellite 10 to which the antenna 2 is connected and it is preferably memorized inside the modem 3.

The connection apparatus 1 further includes a database of coverages of the satellites 10, which reports the coverage of the satellite in accordance with the geographic areas of the terrestrial globe. The satellite coverage database is, therefore, usable in particular in relation to the position indicated by the position detection device 5.

The apparatus 1 also preferably includes a database of coverages as a function of obstacles 12.

In fact, the connection of the antenna to the satellite 10 can be interrupted by a physical obstacle 12 forming part of the transport means, like the smokestack of a ship, a mast of a ship or otherwise by a functional obstacle like a radar or other such obstacle.

The obstacle 12, therefore, prevents reception, particularly in angular sectors that remain constant independent of the position of the transport means 11 on the globe, but depending only on the position of the antenna 2 relative to the transport means 11.

The connection apparatus 1 is, furthermore, suitable to memorize the quality of reception of the signal as a function of the angular position of the antenna 2, so as to improve and continuously update the database of coverages dependent on obstacles 12.

Finally, a priority database is present, capable of establishing an order of preference among the different satellites 10, said order of preference following criteria like better reception, greater control, greater speed of transmission, lower cost of connection, etc.

Said databases are located preferably inside the modem 3 and two or more of them can be combined in a single database.

The invention provides a new method of connection of transport means 11 to a network and, in particular, to the internet network by satellite.

According to the database method of settings for different satellites 10, the database of coverages of the satellites 10 and database of priorities are initially loaded in the modem 3.

At the time of installation of the connection apparatus 1 the database of coverages dependent on obstacles 12 is further provided.

This latter database is created by verifying the presence of obstacles 12 on the transport means 11. Moreover, it is continuously updated by memorizing the quality of reception of the signal as a function of the angular position of the antenna 2.

Consequently, if new obstacles 12 are encountered or if the obstacles 12 memorized change, the database of coverages dependent on obstacles 12 is continuously updated and improved.

The apparatus 1 is, therefore, placed on the transport means 11.

The same apparatus 1 detects the position of the transport means 11 through the device 5 and, therefore, takes into consideration during the automatic verification phase the satellites 10 that cover such position, according to the database of coverages of the satellites 10.

The apparatus 1 then eliminates by momentary consideration, always during said verification phase, the satellites 10 that reenter inaccessible angular sectors. Such latter operation is performed by consulting the database of coverages dependent on obstacles 12 and through a simple calculation based on the relative position of satellite 10 and transport means 11 and on the consequent direction of the antenna 2.

The apparatus 1, therefore, takes into consideration only the satellites 10 that are in coverage at the time.

Among the satellites 10 taken into consideration, the apparatus 1 selects the first satellite according to the order of the priority database. If several satellites have the same priority in such database, the choice is random.

The apparatus 1, therefore, places the antenna 2, through said actuator means, in the direction of a first satellite 10 selected and, in particular, that is the same antenna 2 to be adjusted.

The modem 3, therefore, determines to which satellite 10 the antenna 2 is connected and, by consulting the setting database, automatically applies the settlings usable on the modem 3.

The modem 3 then receives the signal from the antenna 2 and transmits it to the network 4 or the like.

The antenna 2 is connected to the first satellite 10 and, being geostabilized, follows the position of same, which varies with the movement of the transport means 11.

When the apparatus 1 determines the entry of the transport means 11 into a zone not covered by the first satellite 10, the same apparatus 1 repeats the calculation of satellites 10 with which it is possible to connect and tracks a different satellite 10.

Such operation can be carried out also in correspondence with the entry of a new satellite 10 with greater preference into a zone of coverage.

The invention achieves important advantages.

In fact, the apparatus 1 makes possible an automatic connection to the internet, also in correspondence with variations of satellite coverage.

The same apparatus 1 further makes it possible to establish a preference among the satellites 10.

A further advantage lies in the fact that the different databases are present on the same apparatus and not on remote devices. Consequently, they are usable even in the absence of connection.

The invention is susceptible to modifications and variants falling within the inventive concept.

## Claims

1. Satellite connection apparatus (1) for transport means (11) comprising:
an antenna (2) of geostabilized type, capable of tracking a first satellite (10) in coverage and of establishing a connection with said first satellite (10), a modem (3) capable of rendering the signal received by said antenna (2) usable by computers and the like, a position detection device (5) capable of determining the position of said transport means (11) on the globe, **characterized in that** it includes automatic actuator means capable of moving said antenna (2), and **in that** said antenna (2) is capable of automatically tracking a different satellite (10) in coverage, when said first satellite (10) is no longer in coverage.

2. Apparatus according to claim 1, wherein said modem (3) is capable of automatically applying the settlings relating to said satellite (10) to which said antenna (2) is connected.

3. Apparatus according to claim 2, including a setting database capable of making said automatic application of settings necessary for interpreting the signal as a function of said satellite (10) to which said antenna (2) is connected.

4. Apparatus according to one or more of the preceding claims, suitable to verify said coverage of said satellites (10) as a function of the position on the globe indicated by said position detection device (5).

5. Apparatus according to claim 4, including a database of coverage of the satellites (10), reporting the coverage of satellites (10) as a function of the geographic areas of the globe.

6. Apparatus according to claim 4 or 5, suitable to verify said coverage of said satellites (10) also as a function of obstacles (12) that are part of said transport means (11).

7. Apparatus according to claim 6, including a database of coverages as a function of said obstacles (12).

8. Apparatus according to one or more of the preceding claims, including a priority database, capable of establishing an order of preference among the said satellites (10) in coverage.

9. Method of connection of transport means (11) to a satellite (10) by a connection apparatus (1) according to one or more of the preceding claims, comprising: a phase of automatic verification of which of said satellites (10) are in coverage, and a phase of tracking by said antenna (2) of a first of said satellites (10) in coverage, and **characterized in that** said verification phase analyzes, following movements of said transport means (11), the continuous coverage of said first satellite (10) and, in case of loss of coverage, reactivates said tracking phase.

10. Method according to claim 9, including a synchronization phase wherein the settings relating to the satellite (10) to which said antenna (2) is connected are automatically applied to said modem (3).

11. Method according to claim 9 or 10, wherein said verification phase is applied as a function of the position on the globe indicated by said position detection device (5).

12. Method according to claim 11, wherein said verification phase is applied also as a function of the presence of obstacles (12) that are part of said transport means (11).

13. Method according to claim 12, wherein said presence of obstacles (12) is verified at the time of installation of said connection apparatus (1) on said transport means.

14. Method according to claim 13, wherein said presence of obstacles (12) is verified through continuous memorization of the quality of reception of the signal as a function of the angular position of said antenna (2).
